# EUROPÄISCHE PATENTSCHRIFT

(11) **EP 4 248 123 B1**
(45) Veröffentlichungstag und Bekanntmachung des Hinweises auf die Patenterteilung: **15.05.2024**
(21) Anmeldenummer: 21815902.8
(22) Anmeldetag: 19.11.2021
(51) Int. Cl.: F17C 5/00, F17C 5/06

(54) **VERFAHREN ZUM BEFÜLLEN EINES TANKBEHÄLTERS EINES FAHRZEUGS MIT GASFÖRMIGEM WASSERSTOFF AUS EINEM VORRATSBEHÄLTER EINER VERSORGUNGSSTATION**
METHOD FOR FILLING A TANK OF A VEHICLE WITH GASEOUS HYDROGEN FROM A STORAGE VESSEL OF A SUPPLY STATION
PROCÉDÉ POUR REMPLIR UN RÉSERVOIR D?UN VÉHICULE AVEC DE L'HYDROGÈNE GAZEUX À PARTIR D'UN RÉSERVOIR DE STOCKAGE D'UNE STATION D'ALIMENTATION

(30) Priorität: 20.11.2020 DE 102020130720
(43) Veröffentlichungstag der Anmeldung: 27.09.2023
(73) Patentinhaber: Deutsche Bahn AG, 10785 Berlin (DE)
(72) Erfinder: PIEPER, Christian, 10317 Berlin (DE); MILELLA, Vito, 96110 Scheßlitz (DE)
(86) Internationale Anmeldenummer: PCT/DE2021/100919
(87) Internationale Veröffentlichungsnummer: WO 2022/105965

(56) Entgegenhaltungen:
- EP-A1- 3 604 890
- WO-A1-2019/230649
- JP-A- 2016 217 468
- JP-A- 2017 057 871
- US-B2- 8 020 589

## Beschreibung

Die Erfindung betrifft ein Verfahren zum Befüllen eines Tankbehälters eines Fahrzeugs mit gasförmigem Wasserstoff aus einem Vorratsbehälter einer Versorgungsstation, wobei das Verfahren die Schritte umfasst:
▪ Verbinden des Vorratsbehälters mit dem Fahrzeugbehälter mittels einer Befülleinrichtung, deren Wasserstoff-Durchfluss mittels eines von einer Steuereinrichtung gesteuerten Ventils reguliert wird,
▪ Ermitteln eines Parameterwertes für die Wärmeabgabecharakteristik des Fahrzeugbehälters,
▪ wiederkehrendes sensorisches Detektieren von Ist-Werten der Temperatur und des Drucks des Wasserstoffs im Fahrzeugbehälter zu diskreten Zeitpunkten tᵢ,
▪ wiederkehrendes Ermitteln jeweils eines Prognosewertes der Temperatur und des Drucks des in den Tankbehälter eingeleiteten Wasserstoffs zu diskreten zukünftigen Zeitpunkten tᵢ₊₁,
▪ periodisches Ermitteln des Befüllungszustands des Fahrzeugbehälters während des Befüllens des Fahrzeugbehälters.

Aufgrund der physikalischen Wechselbeziehungen zwischen Temperatur, Druck und Volumen von Gasen hängt die Menge von gasförmigem Wasserstoff, mit der ein Brennstoffzellen-Fahrzeug an einer Versorgungsstation betankt werden kann, nicht nur von den Parametern des Fahrzeugtanks ab, wie z.B. dem Füll-Volumen des Fahrzeugtanks, sondern auch vom Zustand des Wasserstoffs während des Betankens, insbesondere von Druck und Temperatur des Wasserstoffs im Fahrzeugtank. Bedingt durch die adiabatische Kompression des gasförmigen Wasserstoffs steigt die Temperatur des Wasserstoffs im Fahrzeugtank während des Einfüllens von Wasserstoff in den Fahrzeugtank an. Je größer die Durchflussmenge bzw. der Massestrom des Wasserstoffs beim Betanken ist, desto signifikanter ist dieser Temperaturanstieg ausgebildet. Nach Abschluss des Tankvorgangs sinken mit zunehmender Abkühlung des Gases die Temperatur und der Druck wieder ab. Aus diesem Grund müssen während des Betankens die aktuellen Werte von Druck und Temperatur des Wasserstoffs im Fahrzeugtank kontinuierlich gemessen und bei der Ermittlung des jeweils aktuellen Befüllungszustandes des Fahrzeugbehälters berücksichtigt werden. Aus US 5,628,349 B ist dem Fachmann ein Verfahren zum Befüllen eines Fahrzeugtanks mit Wasserstoff bekannt, bei dem periodische Prognosewerte für den Befüllungszustand des Fahrzeugtanks ermittelt werden, um einen möglichst hohen Befüllungszustand unter Berücksichtigung der Setzungs- und Beruhigungsvorgänge im Fahrzeugtank zu erreichen. Dabei muss der Massestrom mit zunehmendem Befüllungsgrad des Fahrzeugtanks deutlich reduziert werden und der Betankungsvorgang wird langsamer. Wenn für einen Betankungsvorgang eine vorgegebene Zeitdauer nicht überschritten werden darf (z.B. um die Verweildauer eines Brennstoffzellen-Fahrzeugs an einer Versorgungsstation auf ein praktikables Maß zu begrenzen), wird die theoretische Füll-Kapazität des Fahrzeugstanks nicht vollständig ausgenutzt.

WO 2019/230649 offenbart ein Verfahren zum Befüllen eines Fahrzeugtanks mit Wasserstoff, bei dem die Betankungsgeschwindigkeit in Abhängigkeit von der Differenz zwischen einem sensorisch ermittelten Temperatur-Zustand im Fahrzeugtank und einem vorgegebenen Temperatur-Grenzwert eingestellt wird, wobei die Kühlleistung des Wärmetauschers eingestellt wird. Eine hierzu ähnliche Offenbarung enthält auch JP 2016 217468 A.

Hierauf basierend ist aus der US 10,082247 B1 bekannt, den Fahrzeugtank unter Berücksichtigung eines empirischen Korrektur-Faktors, der aus zeitlich früheren Betankungsvorgängen an Fahrzeugtanks mit denselben Parameterwerten für Volumen und Wärmeabgabecharakteristik gewonnen wurde und die Effekte der Setzungs- und Beruhigungsvorgänge im Fahrzeugtank antizipieren soll, gezielt mit Wasserstoff zu "überfüllen", um auf diese Weise die Betankung zu beschleunigen und den Befüllungsgrad zu maximieren. Das Betanken kann auf diese Weise abgeschlossen werden, ohne auf das Abklingen der Setzungsvorgänge im Fahrzeugtank warten zu müssen.

Zur weiteren Verbesserung der Effizienz des Betankungsvorgangs schlägt JP 2011-122657 A das Ermitteln von Prognosewerten für die Temperatur des Wasserstoffs im Fahrzeugtank sowie deren kontinuierliches Abgleichen mit den dann jeweils tatsächlich erreichten Ist-Temperaturwerten vor. Sobald eine Diskrepanz zwischen Prognosewert und tatsächlich detektiertem Wert einen vorgebbaren Grenzwert überschreitet, wird die Durchflussmenge der Befüllvorrichtung reduziert oder sogar vollständig unterbrochen.

Neben solchen Maßnahmen, die das Verlangsamen des Einfüllvorgangs bei einem nahezu vollständig gefüllten Fahrzeugtank thematisieren, ist auch das aktive Vorkühlen des Wasserstoffs in den Vorratsbehälter der Versorgungsstation sowie in den Befülleinrichtungen, mittels denen eine Verbindung zwischen Fahrzeugtank und Vorratsbehältern hergestellt wird, bekannt. Auf diese Weise wird das Temperaturniveau des Wasserstoffs während einer zeitlichen Vorlaufphase vor der eigentlichen Betankung künstlich so weit abgesenkt, so dass die Temperatur im Fahrzeugtank trotz der physikalisch unvermeidbaren adiabatischen Temperaturerhöhung des in den Fahrzeugtank eingeleiteten Wasserstoffs nicht an die konstruktions- und werkstoffbedingte Temperaturgrenze des Fahrzeugtanks herankommt bzw. diese nicht überschreitet. Dies ermöglicht ein schnelleres Befüllen des Fahrzeugtanks, insbesondere bei höheren Befüllungsgraden (d.h. also bei einem SOC (= "State of Charge"), der sich 100% annähert). So ist es aktuell bei Wasserstoff-Tankstellen für Straßenfahrzeuge üblich, den Wasserstoff auf eine Temperatur von -40°C vorzukühlen. Allerdings kann dies zu einem Einfrieren oder Vereisen der Befülleinrichtung, insbesondere des Dispensers, führen. Diese müssen deshalb mittels Heizeinrichtungen wiederum erwärmt werden. Alternativ hierzu werden auch Steuerungen eingesetzt, mittels denen die Vorkühlung für eine gewisse Zeit unterbrochen wird, damit die Befülleinrichtung abtauen kann und im Anschluss hieran wieder gebrauchstauglich ist. Dies setzt aber die Leistungsfähigkeit der Tankanlage deutlich herab, da die jeweilige Befülleinrichtung zusätzlich zum eigentlichen Betankungsvorgang auch für die Dauer solcher zusätzlichen zeitlichen Phasen für andere Nutzer blockiert ist. Hierdurch gestaltet sich der Betrieb solcher Versorgungsstationen als sehr energieintensiv und teuer.

Der Erfindung liegt daher die Aufgabe zugrunde, ein gattungsgemäßes Verfahren zum Befüllen eines Tankbehälters eines Fahrzeugs mit gasförmigem Wasserstoff aus einem Vorratsbehälter einer Versorgungsstation bereitzustellen, welches einen kostengünstigeren und effizienteren Betrieb der Versorgungsstation ermöglicht.

Erfindungsgemäß wird diese Aufgabe in Verbindung mit dem Oberbegriff des Patentanspruches 1 dadurch gelöst, dass ein Aktivierungssignal an eine zur Kühlung des in der Versorgungsstation zu einem Zeitpunkt tᵢ befindlichen Wasserstoffs eingerichtete Kühleinrichtung ausgegeben wird, sobald zumindest ein für einen Zeitpunkt tᵢ detektierter Ist-Temperaturwert des Wasserstoffs im Fahrzeugbehälter den für denselben Zeitpunkt tᵢ ermittelten Prognosewert der Temperatur des Wasserstoffs im Fahrzeugbehälter um einen anhand des Parameterwertes bestimmten Differenz-Grenzwert überschreitet oder zumindest ein für einen Zeitpunkt tᵢ detektierter Ist-Temperaturwert einen anhand des Parameterwertes bestimmten ersten Absolut-Grenzwert überschreitet, sowie die Kälteleistung der Kühleinrichtung für nachfolgende Zeitpunkte tᵢ₊ₖ, _{(k≠0)} derart nachgeregelt wird, dass für die Zeitpunkte tᵢ₊ₖ, ermittelte Prognosewerte der Temperatur des Wasserstoffs im Fahrzeugbehälter einen zweiten absolut Grenzwert nicht überschreiten.

Auf diese Weise kann die Absenkung des Temperaturniveaus des in den Fahrzeugbehälter einzufüllenden Wasserstoffs bedarfsgerechter an die tatsächlichen Erfordernisse in eine zeitliche Parallelität zum eigentlichen Betankungsvorgang gebracht werden; das heißt das Abkühlen des Wasserstoffs erfolgt gleichzeitig oder in alternierender Weise während des tatsächlichen Fließens eines Massestroms über die Befülleinrichtung. Die aus dem Stand der Technik notwendige zeitliche Vorlaufphase zum Vorkühlen des Wasserstoffs vor dem Start des eigentlichen Betankungsvorgangs entfällt. Zudem ist die Kühleinrichtung nicht dauerhaft oder während eines vorab im Zuge der Anlagendimensionierung fest definierten Zeitraumes in Betrieb, sondern nur bei Bestehen eines tatsächlichen Kühlbedarfs während jedes einzelnen Betankungsvorgangs, und zwar zu einer in Bezug auf diesen konkreten Betankungsvorgang exakt dimensionierten Dauer. Insbesondere gewährleistet das erfindungsgemäße Verfahren auch die konsequente Entkopplung der Kühlung des Wasserstoffs vom Verdichten des Wasserstoffs in den Vorratsbehältern, da die Kühlung ausschließlich auf die zeitliche Phase des Betankungsvorgangs beschränkt ist. Während des Betankungsvorgangs darf die Verdichtung des Wasserstoffs gemäß den geltenden technischen Vorgaben nicht aktiv sein, um ein Durchleiten von Verdichtungs-Druckwellen in einen an den Vorratsbehälter angeschlossenen Fahrzeugtank zu verhindern. Auf diese Weise ist ein wechselweiser Betrieb der Kühleinrichtung und des Verdichters der Vorratsbehälter realisierbar, ohne dass sich hierdurch die Betankungsvorgänge in nachteiliger Weise zeitlich verlängern würden. Im Ergebnis kann der für den Betrieb der Versorgungsstation erforderliche elektrische Netzanschluss kleiner dimensioniert werden. Dies ermöglicht einen kostengünstigeren Betrieb der Versorgungsstation.

Das "Aktivierungssignal" stellt die Signalisierung eines solchen Kühlungsbedarfs an die Steuereinrichtung einer in der Versorgungsstation eingerichteten bzw. integrierten Kühleinrichtung dar.

Der Kühlungsbedarf wird durch eine Eingriffsschwelle signalisiert, deren Eingriffsbedingungen durch einen aus zwei Elementen gebildeten Vektor beschreibbar sind. Hierbei wird der Kühlungsbedarf zum einen durch einen Vergleich der Differenz zwischen einem für einen Zeitpunkt tᵢ detektierten Ist-Temperaturwert des Wasserstoffs im Fahrzeugbehälter und einem für denselben Zeitpunkt tᵢ ermittelten Prognosewert der Temperatur des Wasserstoffs im Fahrzeugbehälter mit einem Differenz-Grenzwert ermittelt. Zum anderen wird der Kühlungsbedarf auch durch einen Vergleich des für einen Zeitpunkt tᵢ detektierten Ist-Temperaturwerts mit einem ersten Absolut-Grenzwert ermittelt. Sobald der vorgenannte Differenz-Grenzwert oder der vorgenannte erste Absolut-Grenzwert überschritten ist, wird die Kälteleistung der Kühleinrichtung für nachfolgende Zeitpunkte tᵢ₊ₖ, _{(k≠0)} des Befüllungsverfahrens derart nachgeregelt, dass für die Zeitpunkte tᵢ₊ₖ, ermittelte Prognosewerte der Temperatur des Wasserstoffs im Fahrzeugbehälter einen zweiten absolut Grenzwert nicht überschreiten. Dieser zweite Grenzwert korreliert mit der absolut maximalen Temperatur im Innenraum des Fahrzeugbehälters und ist nicht notwendigerweise identisch mit dem ersten absolut-Grenzwert, der die Eingriffsschwelle definiert.

Die vorgenannte, aus zwei Eingriffsbedingungen gebildete Eingriffsschwelle für das Ausgeben des Aktivierungssignals ist dahingehend zu verstehen, dass dieses Aktivierungssignal auch bei gleichzeitigem Vorliegen beider vorgenannter Eingriffsbedingungen ausgegeben wird.

Sowohl der vorgenannte Differenz-Grenzwert als auch der vorgenannte erste Absolut-Grenzwert werden jeweils durch die Steuereinrichtung der Versorgungsstation ermittelt, sobald im Zuge eines zeitlich früheren Verfahrensschrittes das Ermitteln von Parameterwerten für die Wärmeabgabecharakteristik des Fahrzeugbehälters durchgeführt worden ist. Zusätzlich können hierbei auch Parameterwerte für das Volumen des Fahrzeugbehälters ermittelt werden. Dieser Verfahrensschritt kann in einem sehr frühen Stadium des erfindungsgemäßen Verfahrens noch vor Beginn des tatsächlichen Befüllens des Fahrzeugbehälters stattfinden, sobald ein initialer Datenaustausch zwischen dem zu betankenden Fahrzeug und der Versorgungsstation stattgefunden hat. Dies kann beispielsweise realisiert sein durch eine drahtlose Kommunikation zwischen einer fahrzeugseitigen Kopplungseinrichtung, in der diese Parameterwerte dauerhaft gespeichert sind, und einer Kopplungseinrichtung der Versorgungsstation, mittels der diese Daten für die Dauer des jeweiligen Betankungsvorgangs in der Steuereinrichtung der Versorgungsstation verfügbar gemacht werden. Zur Ermittlung eines solchen Grenzwertes für die Temperatur des Wasserstoffs im Fahrzeugtank ist in erster Linie ein Parameterwert erforderlich, der die Wärmeabgabecharakteristik des Fahrzeugtanks definiert. Dies kann auch durch die aktuell übliche Typangabe des Fahrzeugtanks geschehen, welche die konstruktive und werkstoffliche Beschaffenheit des Fahrzeugtanks codiert.

Es wäre dabei zwar grundsätzlich auch denkbar, auf den Verfahrensschritt zur Ermittlung dieser Parameterwerte zu verzichten, was beispielsweise dann erforderlich ist, wenn das zu betankende Fahrzeug nicht zur oben dargestellten Kommunikation mit der Versorgungsstation eingerichtet ist (sog. "nicht-kommunikatives Betanken"). In diesem Fall würde sich der Verfahrensschritt zur Ermittlung der Parameterwerte auf das Auswählen eines vorgebbaren Parameterwertes für einen Fahrzeugbehälter mit den schlechtesten thermischen Charakteristiken beschränken. Es liegt auf der Hand, dass sich dies negativ auf die Leistungsfähigkeit des Befüllvorgangs auswirkt und somit ein solches "nicht-kommunikatives Betanken" möglichst vermieden werden soll.

Die Kühleinrichtung ist eingerichtet zum Kühlen des im Vorratsbehälter der Versorgungsstation befindlichen sowie des die Befülleinrichtung, die mittels Rohrleitungen und Dispenser die physische Verbindung zwischen dem Fahrzeugbehälter und dem Vorratsbehälter herstellt, durchströmenden Wasserstoffs. Auch wenn im Kontext dieser Erfindung aus Gründen der sprachlichen Vereinfachung von "einem" Vorratsbehälter die Rede ist, so ist für den Fachmann dennoch problemlos ersichtlich, dass sich die vorgeschlagene Kühlung auf die in der Realität vorhandene Mehrzahl von kaskadierend zu entleerenden Vorratsbehältern mit jeweils unterschiedlichen Fülldrücken erstreckt. Analoges gilt für die Versorgungseinrichtung, die in der Realität eine Mehrzahl von Befülleinrichtungen zum parallelen Betanken mehrerer Fahrzeuge aufweisen kann.

Es ist vorgesehen, die zeitliche Dauer des Betriebs der Kühleinrichtung an die zeitliche Dauer des Fortbestehens des Kühlbedarfes während des restlichen Betankungsvorgangs bis zum Trennen der Verbindung zwischen Fahrzeugbehälter und Vorratsbehälter (beispielsweise durch Deaktivieren und "Einhängen" des Dispensers an einer Zapfsäule der Versorgungsstation) zu koppeln. Hierbei wird die Kälteleistung der Kühleinrichtung für nachfolgende Zeitpunkte tᵢ₊ₖ, _{(k≠0)} des Befüllungsverfahrens bis zum vorgenannten Trennen der Verbindung zwischen Fahrzeug- und Vorratsbehälter derart nachgeregelt, dass für die Zeitpunkte tᵢ₊ₖ, ermittelte Prognosewerte der Temperatur des Wasserstoffs im Fahrzeugbehälter einen zweiten absolut Grenzwert nicht überschreiten. Die Kühleinrichtung ist somit in einen geschlossenen Regelkreis eingebunden, mittels dem die Öffnungsweite des Ventils der Befülleinrichtung und damit der Wasserstoff-Durchfluss durch die Befülleinrichtung in Abhängigkeit von den sensorisch detektieren tatsächlichen Ist-Werten der Temperatur und des Drucks des Wasserstoffs im Fahrzeugbehälter und die Kälteleistung der Kühleinrichtung mit der Zielstellung einer möglichst großen Öffnungsweite des Ventils (bzw. eines maximalen Massendurchflusses von Wasserstoff an der Ventilöffnung) und einer konstanten Ausgangstemperatur des Wasserstoffs an der Ventilöffnung reguliert werden. Das Aktivieren der Kühleinrichtung bewirkt das konstante Unterschreiten des zweiten Absolut-Grenzwertes für die Temperatur im Fahrzeugtank. Sobald die Kühleinrichtung aktiviert ist, orientiert sich deren Kühlleistung an der Regelabweichung. Je stärker diese ist, desto stärker ist die Nachführung der Kühlleistung durch die Kühleinrichtung. Die Durchflussmenge durch die Befülleinrichtung wird über den geschlossenen Regelkreis kontinuierlich mittels der sensorisch detektierten Messwerte und der hieraus ermittelten Prognosewerte berechnet und geregelt.

Zugleich ist die Kühleinrichtung aber auch in einen zweiten Regelkreis eingebunden, mittels dem die Leistungsaufnahme am elektrischen Netzanschluss der Versorgungsstation geregelt und begrenzt wird. Über diesen zweiten Regelkreis wird der Kühleinrichtung die jeweils effektiv verfügbare elektrische Anschlussleistung nach Abzug des für den sonstigen Betrieb der Versorgungsstation erforderlichen Leistungsbedarfs zur Verfügung gestellt.

Somit bietet die Erfindung ein Verfahren zum Befüllen eines Tankbehälters eines Fahrzeugs mit gasförmigem Wasserstoff aus einem Vorratsbehälter einer Gasstation an, welches gleichzeitig die Regelung des Wasserstoff-Massestroms und der Leistung der Kühleinrichtung ermöglicht. Auf diese Weise können die Betriebskosten der Versorgungsstation reduziert werden, ohne hierbei Abstriche in Bezug auf ein schnelles und möglichst vollständiges Betanken des Fahrzeugs in Kauf nehmen zu müssen.

Gemäß einer besonders bevorzugten Weiterentwicklung der erfinderischen Grundidee wird mittels des Aktivierungssignals eine Vorrichtung zum Einstellen des Massestroms im Kältekreislauf der Kühleinrichtung aktiviert. Die Aktivierung bewirkt ein Erhöhen des Massestroms im Kältekreislauf. Auf diese Weise kann die Reaktionszeit der Kühleinrichtung bei der Bereitstellung der mittels des Aktivierungssignals angeforderten zusätzlichen Kühlleistung verkürzt und das Abkühlen des Wasserstoffs beschleunigt werden. Auf diese Weise sind eine höhere Dynamik bei der Anpassung der Kühlleistung der Kälteeinrichtung und in deren Folge auch eine höhere Dynamik bei der Anpassung des Wasserstoff-Massestroms in der Befülleinrichtung realisierbar. Die Kühlung des Wasserstoffs und der Massestrom-Durchfluss lassen sich während des Betankungsvorgangs durch die reaktionsschnellere und dynamischere Regelung "feiner" beeinflussen und regulieren. Zugleich kann zu Beginn des Betankungsvorgangs (d.h. noch vor Aktivieren der Vorrichtung zum Einstellen des Massestroms im Kältekreislauf) eine erste Durchflussmenge und Kühlleistung vorgesteuert werden, ohne bereits über konkrete Kenntnisse zur Regelabweichung im ersten Regelkreis zu verfügen. Die Kühleinrichtung ist während dieser Phase in einer Art "niedriger Grundlast" betreibbar. Dies ermöglicht beispielsweise auch ein Vorkonditionieren der Versorgungsstation, die in einem solchen ersten Betriebsmodus mit geringer Kühlleistung schon dann in Betrieb genommen werden kann, während sich ein zu betankendes Fahrzeug der Versorgungsstation annähert. Das erfindungsgemäße Aktivieren der Vorrichtung zum Einstellen des Massestroms im Kältekreislauf und damit der Wechsel in einen zweiten, schnell reagierenden Betriebsmodus erfolgt dann erst nach tatsächlichem Start der Wasserstoff-Betankung und dient dem Abdecken von Lastspitzen beim erfindungsgemäß ermittelten Kühlbedarf zur Beschleunigung des Betankungsvorgangs.

Gemäß einer ersten Ausführungsvariante wird mittels des Aktivierungssignals ein Frequenzumrichter des Kälteerzeugers der Kühleinrichtung aktiviert. Dies stellt eine besonders einfach zu realisierende Ausgestaltung der erfinderischen Grundidee dar, die zusätzlich auch die Anwendbarkeit des Verfahrens für Kühleinrichtungen mit Adsorptions- oder Absorptionskältemaschinen ermöglicht, welche keinen mechanischen Antrieb aufweisen.

Gemäß einer hierzu alternativen zweiten Ausführungsvariante wird mittels des Aktivierungssignals ein Vorverdichter des Kälteerzeugers der Kühleinrichtung aktiviert. Dies stellt eine besonders effektive und leistungsfähige Ausgestaltung der erfinderischen Grundidee dar, welche insbesondere für Kühleinrichtungen mit Kompressionskältemaschinen nutzbar ist.

## Patentansprüche

1. Verfahren zum Befüllen eines Tankbehälters eines Fahrzeugs mit gasförmigem Wasserstoff aus einem Vorratsbehälter einer Versorgungsstation, wobei das Verfahren die Schritte umfasst:
▪ Verbinden des Vorratsbehälters mit dem Fahrzeugbehälter mittels einer Befülleinrichtung, deren Wasserstoff-Durchfluss mittels eines von einer Steuereinrichtung gesteuerten Ventils reguliert wird,
▪ Ermitteln eines Parameterwertes für die Wärmeabgabecharakteristik des Fahrzeugbehälters,
▪ wiederkehrendes sensorisches Detektieren von Ist-Werten der Temperatur und des Drucks des Wasserstoffs im Fahrzeugbehälter zu diskreten Zeitpunkten tᵢ,
▪ wiederkehrendes Ermitteln jeweils eines Prognosewertes der Temperatur und des Drucks des in den Tankbehälter eingeleiteten Wasserstoffs zu diskreten zukünftigen Zeitpunkten tᵢ₊₁,
▪ periodisches Ermitteln des Befüllungszustands des Fahrzeugbehälters während des Befüllens des Fahrzeugbehälters,
wobei
ein Aktivierungssignal an eine zur Kühlung des in der Versorgungsstation zu einem Zeitpunkt tᵢ befindlichen Wasserstoffs eingerichtete Kühleinrichtung ausgegeben wird, sobald zumindest ein für einen Zeitpunkt tᵢ detektierter Ist-Temperaturwert des Wasserstoffs im Fahrzeugbehälter den für denselben Zeitpunkt tᵢ ermittelten Prognosewert der Temperatur des Wasserstoffs im Fahrzeugbehälter um einen anhand des Parameterwertes bestimmten Differenz-Grenzwert überschreitet oder zumindest ein für einen Zeitpunkt tᵢ detektierter Ist-Temperaturwert einen anhand des Parameterwertes bestimmten ersten Absolut-Grenzwert überschreitet,
sowie die Kälteleistung der Kühleinrichtung für nachfolgende Zeitpunkte tᵢ₊ₖ, _{(k≠0)} derart nachgeregelt wird, dass für die Zeitpunkte tᵢ₊ₖ, ermittelte Prognosewerte der Temperatur des Wasserstoffs im Fahrzeugbehälter einen zweiten absolut Grenzwert nicht überschreiten.

2. Verfahren zum Befüllen eines Tankbehälters eines Fahrzeugs mit gasförmigem Wasserstoff aus einem Vorratsbehälter einer Gasstation nach Patentanspruch 1, **dadurch gekennzeichnet, dass** mittels des Aktivierungssignals eine Vorrichtung zum Einstellen des Massestroms im Kältekreislauf der Kühleinrichtung aktiviert wird.

3. Verfahren zum Befüllen eines Tankbehälters eines Fahrzeugs mit gasförmigem Wasserstoff aus einem Vorratsbehälter einer Gasstation nach Patentanspruch 1 oder 2, **dadurch gekennzeichnet, dass** die Vorrichtung zum Einstellen des Massestroms im Kältekreislauf der Kühleinrichtung als ein Frequenzumrichter des Kälteerzeugers der Kühleinrichtung ausgeführt ist.

4. Verfahren zum Befüllen eines Tankbehälters eines Fahrzeugs mit gasförmigem Wasserstoff aus einem Vorratsbehälter einer Gasstation nach einem der Patentansprüche 1 bis 3, **dadurch gekennzeichnet, dass** die Vorrichtung zum Einstellen des Massestroms im Kältekreislauf der Kühleinrichtung als ein Vorverdichter des Kälteerzeugers der Kühleinrichtung ausgeführt ist.

## Claims

1. A method of filling a tank container of a vehicle with gaseous hydrogen from a storage container of a supply station, wherein the method comprises the steps of:
- connecting the storage container to the vehicle container by means of a filling device, of which the hydrogen flow is regulated by means of a valve controlled by a control device,
- determining a parameter value for the heat dissipation characteristic of the vehicle container,
- recurring sensor-based detecting of actual values of the temperature and pressure of the hydrogen in the vehicle container at discrete times tᵢ,
- recurring determining of a forecast value of the temperature and pressure of the hydrogen introduced into the tank at discrete future times tᵢ₊₁,
- periodic determination of the filling state of the vehicle container during the filling of the vehicle container,
wherein an activation signal is output to a cooling device set up for cooling the hydrogen present in the supply station at a time tᵢ as soon as at least one actual temperature value of the hydrogen in the vehicle container detected for a time tᵢ exceeds the forecast value of the temperature of the hydrogen in the vehicle container determined for the same time tᵢ by a differential limit value determined based on the parameter value, or as soon as at least one actual temperature value detected for a time ti exceeds a first absolute limit value determined based on the parameter value,
and the refrigeration capacity of the cooling device for subsequent times tᵢ₊ₖ, _{(k≠0)} is readjusted in such a way that the forecast values of the temperature of the hydrogen in the vehicle container determined for the times tᵢ₊ₖ do not exceed a second absolute limit value.

2. Method for filling a tank container of a vehicle with gaseous hydrogen from a storage container of a gas station according to claim 1, **characterised in that** a device for adjusting the mass flow in the refrigeration circuit of the cooling device is activated by means of the activation signal.

3. Method for filling a tank container of a vehicle with gaseous hydrogen from a storage container of a gas station according to claim 1 or 2, **characterised in that** the device for adjusting the mass flow in the refrigeration circuit of the cooling device is designed as a frequency converter of the refrigeration generator of the cooling device.

4. Method for filling a tank container of a vehicle with gaseous hydrogen from a storage container of a gas station according to one of claims 1 to 3, **characterised in that** the device for adjusting the mass flow in the refrigeration circuit of the cooling device is designed as a precompressor of the refrigeration generator of the cooling device.

## Revendications

1. Procédé de remplissage d'un réservoir d'un véhicule avec de l'hydrogène gazeux d'un réservoir de stockage d'une station d'alimentation, dans lequel le procédé comprend les étapes suivantes :
- la liaison du réservoirdestockage avec le réservoirduvéhicule au moyend'undispositif de remplissage, dont le débit en hydrogène est régulé au moyen d'une soupape commandée par un dispositif de commande,
- la détermination d'une valeur deparamètrepour lacaractéristiquede dissipation de chaleur du récipientdevéhicule,
- la détection sensorielle répétée de valeurs réelles de la température et de la pression de l'hydrogène dans le réservoirduvéhicule à des moments discrets ti,
- la détermination répétée respectivement d'une valeur prévisionnelle de la température et de la pression de l'hydrogène introduit dans leréservoirà des moments futurs discretsₜᵢ+₁,
- la détermination périodique del'étatde remplissageduréservoirdu véhicule pendantleremplissage du réservoirduvéhicule,
dans lequel un signal d'activation est envoyé à un dispositif de refroidissement conçu pour le refroidissement de l'hydrogène se trouvant dans la station d'alimentation à un moment ti dès qu'au moins une valeur de température réelle détectée pour un moment ti de l'hydrogène dans le réservoir du véhicule dépasse la valeur prévisionnelle déterminée pour le même moment ti de la température de l'hydrogène dans le réservoir du véhicule d'une valeur limite différentielle déterminée à l'aide de la valeur de paramètre ou au moins une valeur de température réelle détectée pour un moment ti dépasse une première valeur limite absolue déterminée à l'aide de la valeur de paramètre,
ainsi que la capacité frigorifique du dispositif de refroidissement est réglée pour des moments suivants tᵢ₊ₖ, _{(k≠0)} de telle manière que pour les moments tᵢ₊ₖ, des valeurs prévisionnelles déterminées de la température de l'hydrogène dans le réservoir du véhicule ne dépassent pas une seconde valeur limite absolue.

2. Procédé de remplissage d'un réservoir d'un véhicule avec de l'hydrogène gazeux d'un réservoir de stockage d'une station-service selon la revendication 1, **caractérisé en ce qu'**un dispositif de réglage du courant de masse dans le circuit de réfrigération du dispositif de refroidissement est activé au moyen du signal d'activation.

3. Procédé de remplissage d'un réservoir d'un véhicule avec de l'hydrogène gazeux d'un réservoir de stockage d'une station-service selon la revendication 1 ou 2, **caractérisé en ce que** le dispositif de réglage du courant de masse dans le circuit de réfrigération du dispositif de refroidissement est réalisé comme un convertisseur de fréquence du générateur de froid du dispositif de refroidissement.

4. Procédé de remplissage d'un réservoir d'un véhicule avec de l'hydrogène gazeux d'un réservoir de stockage d'une station-service selon l'une quelconque des revendications 1 à 3, **caractérisé en ce que** le dispositif de réglage du courant de masse dans le circuit de réfrigération du dispositif de refroidissement est réalisé comme un pré-compresseur du générateur de froid du dispositif de refroidissement.
